# EUROPEAN PATENT APPLICATION

(11) **EP 1 079 387 A2**
(43) Date of publication of application: **28.02.2001**
(21) Application number: 00306974.7
(22) Date of filing: 15.08.2000
(51) Int. Cl.: G11B 27/00, G11B 27/11, G06F 17/30

(54) **Mechanism for storing information about recorded television broadcasts**

(30) Priority: 26.08.1999 US 383759
(71) Applicant: Matsushita Electric Industrial Co., Ltd., Kadoma City, Osaka 571 (JP)
(72) Inventor: Junqua, Jean-Claude, Santa Barbara, california 93110 (US); Kuhn, Roland, Santa Barbara, California 93110 (US); Davis, Tony, Santa Barbara, California 93101 (US); Li, Weiying, Montreal H2A 1W9 (CA); Zhao, Yi, Goleta, California 93117 (US)
(74) Representative: Franks, Robert B.

(57) **Abstract**

Program content, recorded to a storage medium such as disk recorder, optical recorder or random access memory, is indexed by the replay file system. The file system maintains a storage location and program I.D. record for each recorded program. The file system further maintains other data obtained from an electronic program guide that may be accessed by downloading from the cable or satellite infrastructure or over the internet. The file system also may store additional user data, such as the date and time the program was last viewed, together with any user-recorded indexes. The file system may be accessed through natural language input speech. The system includes a speech recognizer and natural language parser, coupled to a dialog system that engages the user in a dialog to determine what the user is interested in accessing from the storage medium. The natural language parser operates with a task-based grammar that is keyed to the electronic program guide data and user data maintained by the file system.

## Description

### Background and Summary of the Invention

The present invention relates generally to interactive television and interactive "replay" TV. More particularly, the invention relates to a speech-enabled system for automatically creating a catalog describing the contents of each TV owner's "library" of stored television broadcasts. The user interacts with the system by speaking complex, natural-language requests for information. The speech recognizer and natural-language parser of the system interpret the meaning of the user's requests and locate those recorded items in the owner's library that best respond to the request. In this way, a user can readily access any previously recorded information without the need for time consuming searching.

The system may also maintains a database of user-specific information, such as information about which recorded programs the user has accessed more recently (or never). This information may be used, for example, to suggest to the user which recorded programs may be deleted when the capacity of the recording device is near full.

For a more complete understanding of the invention, its objects and advantages, refer to the following specification and to the accompanying drawings.

### Brief Description of the Drawings

Figure **1** is a system block diagram of the system for storing information about recorded broadcasts, illustrating the presently preferred file system structure;
Figure **2** is a block diagram depicting the components of the natural language parser of the presently preferred embodiment of the invention; and
Figure **3** is a block diagram depicting the components of the local parser of the presently preferred embodiment of the invention.

### Description of the Preferred Embodiment

The basic interactive, replay TV allows the user to specify which programs should be stored for future viewing. Current technology uses hard disk recorders to store the program content. In the future, hard disk recorders may be replaced by other media, including optical media and non-volatile random access memory.

Regardless of the type of storage media used, the basic problem is how to locate stored information at a later time.

The presently preferred embodiment provides an interactive, multimodal user interface for storing and retrieving information. The replay file system of the preferred embodiment captures information about each recorded program from the electronic program guide available via cable, satellite or internet.

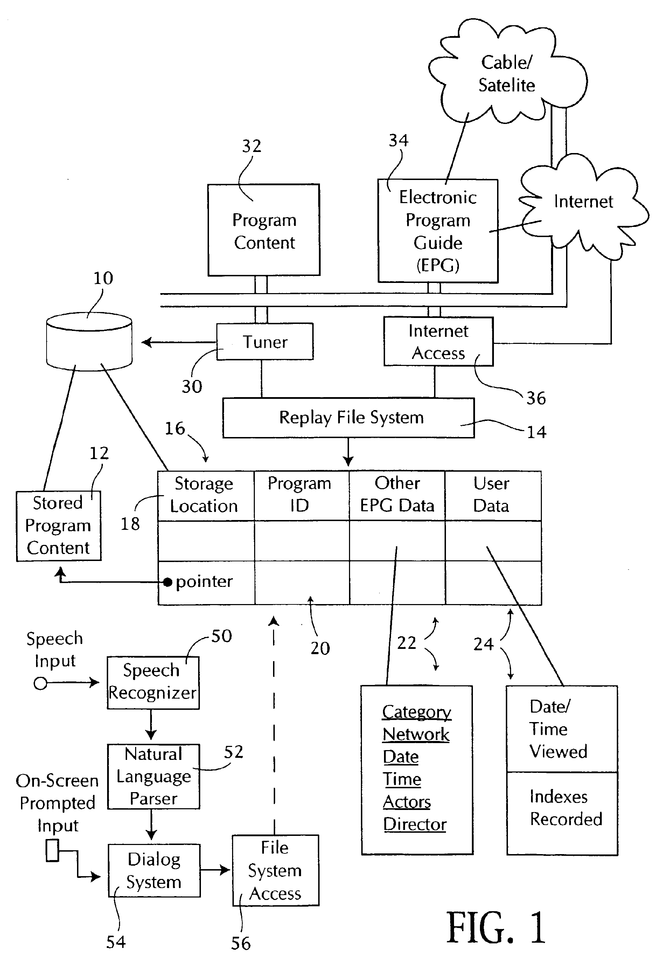

Referring to Figure **1**, a storage medium, such as a hard disk recorder medium, is illustrated at **10**. The medium may be suitably partitioned to store program content (i.e., recorded broadcasts) together with a file system content access table used to retrieve information at a later date. The stored program content, depicted diagrammatically at **12**, may be stored on the medium **10** according to any suitable physical file storage structure. For example, the content may be stored in blocks of a predetermined size at specified starting locations within the storage medium.

The replay file system **14** used to access the stored program content may also be stored on medium **10**, or alternatively on some other storage device or memory. The file system structure is illustrated generally at **16**. The structure includes a storage location record **18** for each program recorded. The information stored in each storage location record may constitute a pointer or address into the medium **10**, showing where a particular stored program content resides.

Associated with each storage location record is a collection of additional data that is extracted from the electronic program guide, as will be more fully discussed below. This additional information may include, for example, a program identifier record **20**, which may be the name of the program or other suitable label. In addition, other electronic program guide data may be stored in association with each program I.D. This other electronic program guide data is illustrated generally at **22** and may include such additional information as the program category (movie, news, weather, etc.) which network broadcasts the program content, the date and time of the broadcast, the actors starring in the broadcast, the director, and so forth. While this other electronic program guide data is not required to locate a recorded program if the program I.D. is known, the additional data is quite useful for enhancing interactive dialog between the user and the system when the program title or label is not known.

In addition, the replay file system may include associated user data records, illustrated at **24**. These additional user data records may include, for example, the dates and times a particular program content was viewed, any recorded indexes the user has added to identify favorite parts of the program content, and so forth. The dates and times a program has been previously viewed can be used with a special feature of the system that mediates how contents of the medium may be selectively erased if the storage medium is nearing full. The user can record preferences in the user data record **24**, indicating whether a particular recorded selection may be automatically erased after a predetermined time, or selectively erased only after it has been viewed, or never erased unless explicitly requested by the user.

An important aspect of the presently preferred replay file system is that the information used to locate recorded program content does not need to be explicitly written into the file system by the user. Rather, the system automatically extracts the appropriate identifying information from the electronic program guide resource that is available from the cable television or satellite broadcast infrastructure or over the Internet. The system automatically extracts electronic program guide information when the user records program content. The system does this through one of several mechanisms, depending on the particular embodiment.

In one embodiment, the tuner **30** tunes to a particular channel so that program content **32** may be viewed by the user or stored in storage medium **10**. The tuner may be connected to a suitable cable television infrastructure or satellite infrastructure, for example. While the tuner is accessing the program content, it also obtains the electronic program guide data **34** from the same cable or satellite infrastructure. Tuner **30** passes the electronic program guide information to the replay file system **14**, where the appropriate information is extracted and included in the file system record for the recorded program.

In an alternate embodiment, the electronic program guide information may be accessed from the Internet by a separate Internet access module **36**. The Internet access module **36** can be coupled by cable modem to the intemet or by telephone to an internet service provider. The intemet access module obtains relevant electronic program guide information pertaining to the program being viewed and stores this information into the replay file system.

Once the stored program content and its associated file system information has been recorded, the user has a number of different options for retrieving this recorded information. The system employs a sophisticated speech-enabled, multimodal user interface whereby the user can use a combination of speech and/or on-screen prompted input (through remote control pushbuttons or the like) to request recorded information for replay.

The speech recognizer **50** receives spoken input through a suitable microphone which may be incorporated into the remote control, into a hands free device placed on a nearby coffee table or the like, or into the storage device or television set. Output from the speech recognizer is supplied to a natural language parser **52**.

The natural language parser of the preferred embodiment is a goal-oriented parser that uses pre-defined goal-oriented grammars to identify different user requests. The goal-oriented grammars are structured to correspond with the electronic program guide information by which the stored program content has been indexed.

The system includes a dialog system **54** that responds to both output from the natural language parser **52** and also to on-screen prompted input. The dialog system has the ability to interact with the user, asking the user additional questions if necessary, in order to ascertain what stored program or programs the user is interested in retrieving. The dialog system is provided with a file system access module **56**. This module accesses the replay file system records, to return all file system records that match the user's request.

For example, the user could speak into the system, "I would like to watch a movie." The dialog system would use its file system access module to ascertain whether there are any movies recorded on the storage medium. If there are numerous movies stored on the system, for instance, the dialog system may prompt the user to narrow the request. The prompt can be supplied as an on-screen prompt or a synthesized speech prompt, or both. In this case, the prompt might ask the user what category of movie he or she is interested in viewing, listing the categories for which there are currently stored programs. The user could then select the category, and the system would continue to prompt the user until the user selected one program for viewing.

The dialog system **54** may also guide the user through other system operations, including the recording operation and other maintenance functions. The dialog system may be invoked, for example, when the disk is near full, and the system can determine by checking the electronic program guide data that the requested program will not fit on the remaining portion of the disk. The dialog system could prompt the user to either refrain from recording the program or to erase one or more previously recorded programs to make room.

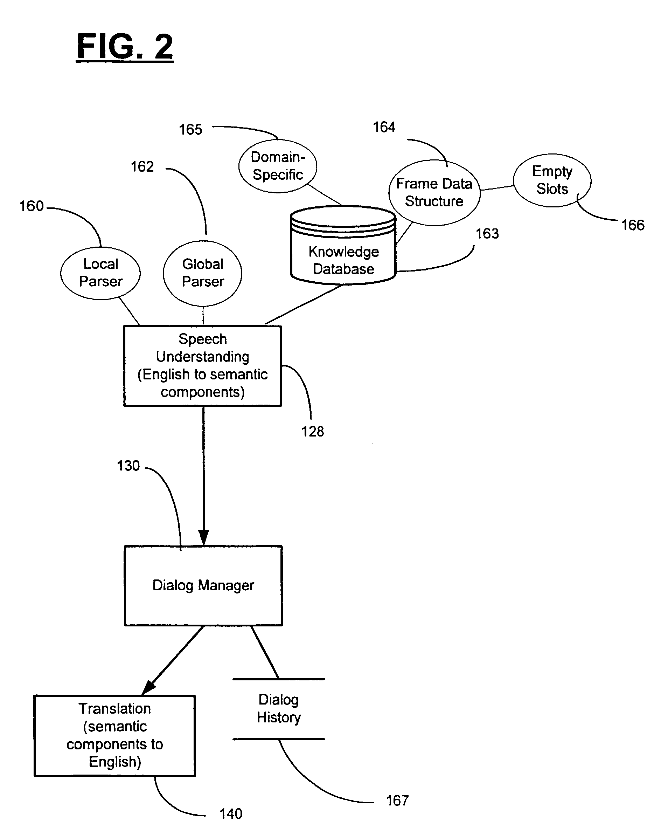

Figure **2** depicts components of the natural language parser **52** in more detail. In particular, speech understanding module **128** includes a local parser **160** to identify predetermined relevant task-related fragments. Speech understanding module **128** also includes a global parser **162** to extract the overall semantics of the speaker's request.

The local parser **160** utilizes in the preferred embodiment small and multiple grammars along with several passes and a unique scoring mechanism to provide parse hypotheses. For example, the novel local parser **102** recognizes according to this approach phrases such as dates, names of people, and movie categories. If a speaker utters "record me a comedy in which Mel Brooks stars and is shown before January 23rd", the local parser recognizes: "comedy" as being a movie category; "January 23rd" as a date; and "Mel Brooks" as an actor. The global parser assembles those items (movie category, date, etc.) together and recognizes that the speaker wishes to record a movie with certain constraints.

Speech understanding module **128** includes knowledge database **163** which encodes the semantics of a domain (i.e., goal to be achieved). In this sense, knowledge database **163** is preferably a domain-specific database as depicted by reference numeral **165** and is used by dialog manager **130** to determine whether a particular action related to achieving a predetermined goal is possible.

The preferred embodiment encodes the semantics via a frame data structure **164**. The frame data structure **164** contains empty slots **166** which are filled when the semantic interpretation of global parser **162** matches the frame. For example, a frame data structure (whose domain is tuner commands) includes an empty slot for specifying the viewer-requested channel for a time period. If viewer **120** has provided the channel, then that empty slot is filled with that information. However, if that particular frame needs to be filled after the viewer has initially provided its request, then dialog manager **130** instructs computer response module **134** to ask viewer **120** to provide a desired channel.

The frame data structure **164** preferably includes multiple frames which each in turn have multiple slots. One frame may have slots directed to attributes of a movie, director, and type of movie. Another frame may have slots directed to attributes associated with the time in which the movie is playing, the channel, and so forth.

The following reference discusses global parsers and frames: R. Kuhn and R. D. Mori, *Spoken Dialogues with Computers (Chapter 14:* Sentence *Interpretation),* Academic Press, Boston (1998).

Dialog manager **130** uses dialog history data file **167** to assist in filling in empty slots before asking the speaker for the information. Dialog history data file **167** contains a log of the conversation which has occurred through the device of the present invention. For example, if a speaker utters "I'd like to watch another Marilyn Monroe movie," the dialog manager **130** examines the dialog history data file **167** to check what movies the user has already viewed or rejected in a previous dialog exchange. If the speaker had previously rejected "Some Like It Hot", then the dialog manager **130** fills the empty slot of the movie title with movies of a different title. If a sufficient number of slots have been filled, then the present invention will ask the speaker to verify and confirm the program selection. Thus, if any assumptions made by the dialog manager **130** through the use of dialog history data file **167** prove to be incorrect, then the speaker can correct the assumption.

The natural language parser **52** analyzes and extracts semantically important and meaningful topics from a loosely structured, natural language text which may have been generated as the output of an automatic speech recognition system (ASR) used by a dialogue or speech understanding system. The natural language parser **52** translates the natural language text input to a new representation by generating well-structured tags containing topic information and data, and associating each tag with the segments of the input text containing the tagged information. In addition, tags may be generated in other forms such as a separate list, or as a semantic frame.

Robustness is a feature of the natural language parser **52** as the input can contain grammatically incorrect English sentences, due to the following reasons: the input to the recognizer is casual, dialog style, natural speech can contain broken sentences, partial phrases, and the insertion, omission, or mis-recognition of errors by the speech recognizer even when the speech input is considered correct. The natural language parser **52** deals robustly with all types of input and extracts as much information as possible.

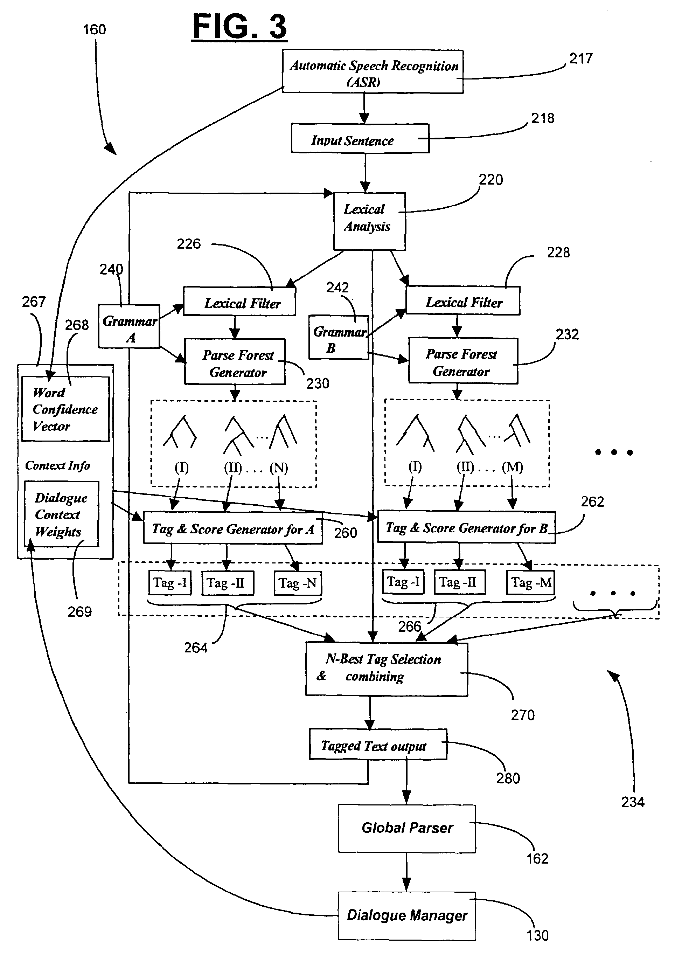

Figure **3** depicts the different components of the local parser **160** of the natural language parser **24**. The natural language parser **52** preferably utilizes generalized parsing techniques in a multi-pass approach as a fixed-point computation. Each topic is described as a context-sensitive LR (left-right and rightmost derivation) grammar, allowing ambiguities. The following are references related to context-sensitive LR grammars: A. Aho and J. D. Ullman, *Principles of Compiler Design,* Addison Wesley Publishing Co., Reading, Massachusetts (1977); and N. Tomita, *Generalized LR Parsing,* Kluwer Academic Publishers, Boston, Massachusetts (1991).

At each pass of the computation, a generalized parsing algorithm is used to generate preferably all possible (both complete and partial) parse trees independently for each targeted topic. Each pass potentially generates several alternative parse-trees, each parse-tree representing a possibly different interpretation of a particular topic. The multiple passes through preferably parallel and independent paths result in a substantial elimination of ambiguities and overlap among different topics. The generalized parsing algorithm is a systematic way of scoring all possible parse-trees so that the (N) best candidates are selected utilizing the contextual information present in the system.

Local parsing system **160** is carried out in three stages: lexical analysis **220**; parallel parse-forest generation for each topic (for example, generators **230** and **232**); and analysis and synthesis of parsed components as shown generally by reference numeral **234**.

### Lexical analysis:

A speaker utters a phrase that is recognized by an automatic speech recognizer **217** which generates input sentence **218**. Lexical analysis stage **220** identifies and generates tags for the topics (which do not require extensive grammars) in input sentence **218** using lexical filters **226** and **228**. These include, for example, movie names; category of movie; producers; names of actors and actresses; and the like. A regular-expression scan of the input sentence **218** using the keywords involved in the mentioned exemplary tags is typically sufficient at this level. Also, performed at this stage is the tagging of words in the input sentence that are not part of the lexicon of particular grammar. These words are indicated using an X-tag so that such noise words are replaced with the letter "X".

### Parallel parse-forest generation:

The natural language parser **52** uses a high-level general parsing strategy to describe and parse each topic separately, and generates tags and maps them to the input stream. Due to the nature of unstructured input text **218**, each individual topic parser preferably accepts as large a language as possible, ignoring all but important words, dealing with insertion and deletion errors. The parsing of each topic involves designing context-sensitive grammar rules using a meta-level specification language, much like the ones used in LR parsing. Examples of grammars include grammar A **240** and grammar B **242**. Using the present invention's approach, topic grammars **240** and **242** are described as if they were an LR-type grammar, containing redundancies and without eliminating shift and reduce conflicts. The result of parsing an input sentence is all possible parses based on the grammar specifications.

Generators **230** and **232** generate parse forests **250** and **252** for their topics. Tag-generation is done by synthesizing actual information found in the parse tree obtained during parsing. Tag generation is accomplished via tag and score generators **260** and **262** which respectively generate tags **264** and **266**. Each identified tag also carries information about what set of input words in the input sentence are covered by the tag. Subsequently the tag replaces its cover-set. In the preferred embodiment, context information **267** is utilized for tag and score generations, such as by generators **260** and **262**. Context information **267** is utilized in the scoring heuristics for adjusting weights associated with a heuristic scoring factor technique that is discussed below. Context information **267** preferably includes word confidence vector **268** and dialogue context weights **269**. However, it should be understood that the parser **52** is not limited to using both word confidence vector **268** and dialogue context weights **269**, but also includes using one to the exclusion of the other, as well as not utilizing context information **267**.

Automatic speech recognition process block **217** generates word confidence vector **268** which indicates how well the words in input sentence **218** were recognized. Dialog manager **130** generates dialogue context weights **269** by determining the state of the dialogue. For example, dialog manager **130** asks a user about a particular topic, such as, what viewing time is preferable. Due to this request, dialog manager **130** determines that the state of the dialogue is time-oriented. Dialog manager **130** provides dialogue context weights **269** in order to inform the proper processes to more heavily weight the detected time-oriented words.

### Synthesis of Tag-components:

The topic spotting parser of the previous stage generates a significant amount of information that needs to be analyzed and combined together to form the final output of the local parser. The parser **52** is preferably as "aggressive" as possible in spotting each topic resulting in the generation of multiple tag candidates. Additionally in the presence of numbers or certain key-words, such as "between", "before", "and", "or", "around", etc., and especially if these words have been introduced or dropped due to recognition errors it is possible to construct many alternative tag candidates. For example, an input sentence could have insertion or deletion errors. The combining phase determines which tags form a more meaningful interpretation of the input. The parser **52** defines heuristics and makes a selection based on them using a N-Best candidate selection process. Each generated tag corresponds to a set of words in the input word string, called the tag's cover-set.

A heuristic is used that takes into account the cover-sets of the tags used to generate a score. The score roughly depends on the size of the cover-set, the sizes in the number of the words of the gaps within the covered items, and the weights assigned to the presence of certain keywords. In the preferred embodiment, ASR-derived confidence vector and dialog context information are utilized to assign priorities to the tags. For example applying channel-tags parsing first potentially removes channel-related numbers that are easier to identify uniquely from the input stream, and leaves fewer numbers to create ambiguities with other tags. Preferably, dialog context information is used to adjust the priorities.

### N-Best Candidates Selection

At the end of each pass, an N-best processor **270** selects the N-best candidates based upon the scores associated with the tags and generates the topic-tags, each representing the information found in the corresponding parse-tree. Once topics have been discovered this way, the corresponding words in the input can be substituted with the tag information. This substitution transformation eliminates the corresponding words from the current input text. The output **280** of each pass is fed-back to the next pass as the new input, since the substitutions may help in the elimination of certain ambiguities among competing grammars or help generate better parse-trees by filtering out overlapping symbols.

Computation ceases when no additional tags are generated in the last pass. The output of the final pass becomes the output of the local parser to global parser **162**. Since each phase can only reduce the number of words in its input and the length of the input text is finite, the number of passes in the fixed-point computation is linearly bounded by the size of its input.

The following scoring factors are used to rank the alternative parse trees based on the following attributes of a parse-tree:
- Number of terminal symbols.
- Number of non-terminal symbols.
- The depth of the parse-tree.
- The size of the gaps in the terminal symbols.
- ASR-Confidence measures associated with each terminal symbol.
- Context-adjustable weights associated with each terminal and non-terminal symbol.

Each path preferably corresponds to a separate topic that can be developed independently, operating on a small amount of data, in a computationally inexpensive way. The architecture of the parser **52** is flexible and modular so incorporating additional paths and grammars, for new topics, or changing heuristics for particular topics is straight forward, this also allows developing reusable components that can be shared among different systems easily.

From the foregoing it will be seen that the system of the invention provides an interactive replay system with dynamically-built replay file system structure. Because the file system structure automatically extracts relevant information from the electronic program guide resources available via cable, satellite and/or intemet, the system requires very little effort on the part of the user, while allowing a very rich interactive dialog to locate and replay stored information.

While the invention has been described in its presently preferred form, it will be understood that the invention is capable of modification without departing from the spirit of the invention as set forth in the appended claims.

## Claims

1. A file system for organizing recorded items of program content, comprising:
a memory having a data structure for storing the location of a recorded item of program content in association with at least one electronic program guide attribute selected from the group consisting of: program title identifier, program category, broadcasting network, date of broadcast, time of broadcast, actors, and director;
an interface for receiving electronic program guide attribute information about a specific item of program content to be stored;
a file write mechanism that automatically stores said electronic program guide attribute information about said item of program content to be stored in said data structure, and
a file read mechanism that ascertains the storage location of a recorded item of program content based on said at least one electronic program guide attribute accessed from said data structure.

2. The file system of claim **1** further comprising a natural language dialog system that interacts with said file read mechanism for supplying electronic program guide attribute inquires to said read mechanism based on spoken requests of a user.

3. The file system of claim **1** wherein said data structure further includes at least one user data attribute in association with said location of a recorded item of program content.

4. The file system of claim **3** wherein said user data attribute stores a record of when the item of program content was viewed by a user.

5. The file system of claim **3** wherein said user data attribute stores at least one user-defined index that identifies a user-defined location within a recorded item.

6. The file system of claim **3** further comprising storage system maintenance system that selectively erases previously recorded items of program content based at least in part upon said user data attribute.

7. The file system of claim **1** wherein said interface for receiving electronic program guide information comprises an internet access system capable of accessing at least one internet-based provider of electronic program guide information.

8. The file system of claim **1** wherein said interface for receiving electronic program guide information comprises a tuner for retrieving electronic program guide information from a supplier of program content.

9. A system for recording program content comprising a storage medium for storing at least one item of program content and a file system as defined in claim **1**.

10. The system of claim **9** wherein said storage medium is a disk memory.

11. The system of claim **9** wherein said storage medium is a tape memory.

12. The system of claim **9** wherein said storage medium is an electronic memory.
